# EUROPÄISCHE PATENTSCHRIFT

(11) **EP 2 389 237 B1**
(45) Veröffentlichungstag und Bekanntmachung des Hinweises auf die Patenterteilung: **07.05.2014**
(21) Anmeldenummer: 09825781.9
(22) Anmeldetag: 03.11.2009
(51) Int. Cl.: B01D 63/02, B01D 65/00, B01D 65/10, B01D 63/06

(54) **VERFAHREN ZUM ABDICHTEN VON MEMBRANMODULEN**
METHOD FOR SEALING MEMBRANE MODULES
PROCÉDÉ D'ÉTANCHÉIFICATION DE MODULES À MEMBRANE

(30) Priorität: 13.11.2008 DE 102008057251
(43) Veröffentlichungstag der Anmeldung: 30.11.2011
(73) Patentinhaber: Whitefox Technologies Limited, London SW1A 2DD (GB)
(72) Erfinder: BLUM, Stephan, Rüdiger, Calgary AB T2N 3X4 (CA)
(74) Vertreter: Potter Clarkson LLP
(86) Internationale Anmeldenummer: PCT/DE2009/001530
(87) Internationale Veröffentlichungsnummer: WO 2010/054620

(56) Entgegenhaltungen:
- EP-A1- 0 355 325
- WO-A1-03/051495
- JP-A- 5 168 875
- US-A- 5 411 662
- US-A1- 2003 029 785
- US-A1- 2004 251 010
- US-B1- 6 582 496

## Beschreibung

Die Erfindung betrifft ein Verfahren für ein Abdichten von Membranmodulen, insbesondere von solchen, bei denen ein Rohr- oder ein Hohtfaserbündel mit einer Vielzahl von insbesondere porösen, eine Membran aufweisenden Rohren oder Hohlfasern endseitig von einer Kopfplatte gefasst und dichtend abgeschlossen ist.

Dabei finden Rohre, Rohrbündel, insbesondere Hohlfaserbündel aus einem Kunststoff, einem Kunststoffverbund, gegebenenfalls auch mit einem schichtweisen Aufbau, aus einer Keramik oder einem Metall Verwendung.

Bei Brennstoffzellen erfolgt in solchen Rohren oder Hohlfasern eines Bündels der Transport einer Brennstoffkomponente, weshalb ein solches als Mikroreaktor ausgelegtes Röhrchen regelmäßig auch mit einer Membran versehen ist, durch die die miteinander reagierenden Brennstoffkomponenten gelrennt sind.

Ein anderes Verwendungsgebiet derartiger Rohrbündel ist die Raffinierung von Treibstoffen aus biologisch nachwachsenden Materialien, beispielsweise aus Bioethanol. Durchströmt Bioethanol ein eine semipermeable Membran ausbildendes Rohr, wird durch die Membran das in dem Bioethanol vorhandene Wasser abgezogen. Solche Membranmodule sind bspw. in der WO 2006/08 7214 erläutert.

Durch ein Potting werden solche Rohrbündel endseitig in einer Kopfplatte gefasst und abgeschlossen. Damit werden die Enden der Rohrbündel untereinander eingefasst und erfolgt gleichzeitig ein dichtender Abschluss gegen ein Gehäuse, eine Rohrleitung oder dergleichen unter Verwendung von Dichtringen. Für das Potting werden Kunstharze, beispielsweise Epoxid-Harze, verwendet oder wie in der WO2007/076855 erläutert, Metalle bzw. Metalllegierungen.

Die Verwendung unterschiedlicher Materialien mit naturgemäß unterschiedlichen Wärmeausdehnungskoeffizienten führt zu erheblichen thermischen Belastungen, die Risse, Brüche oder dergleichen mehr und damit Undichtigkeiten im Bereich der Kopfplatte hervorrufen können, was regelmäßig zu einem Versagen der gesamten Vorrichtung führt. Neben häufigen Undichtigkeiten aufgrund fehlerhafter oder schlecht sitzender Dichtungsringe kommt es regelmäßig auch zu Brüchen der Kopfplatte. Dabei können zwei typische Bruchformen unterschieden werden. Ringförmige, halbmondförmige Brüche stellen eine erste Bruchform dar, die sich axial in einer äußeren Schicht der Kopfplatte erstrecken.

Radiale Brüche erscheinen bei einer optischen Inspektion der Pottingoberfläche unscheinbar. Wird jedoch ein die Kopfplatte haltende Montagering entfernt, sind diese Risse klar erkennbar. Scheinbar entstehen diese Risse unter den Dichtungsringen zwischen dem Montagering und der Kopfplatte und pflanzen sich in den kristallinen Abschnitten der Kopfplatte fort, dabei sich vielfach verästelnd, und es kann durchaus zu einem Abbrechen ganzer Stücke der Kopfplatte kommen.

Um solche Defekte zu erkennen, die zu Undichtigkeiten regelmäßig führen können, ist es notwendig, den Montagering zu lösen, die Kopfplatte mit Rohrbündeln einem Gehäuse zu entnehmen und einer visuellen Kontrolle zu unterziehen.

Werden Defekte festgestellt, werden solche Einsätze der Membranmodule einfach ausgetauscht. Solches ist aufwendig und teuer.

Die WO 2003/051495 A1 offenbart ein Verfahren zur Herstellung eines Hohlfasermembranmoduls (100), welches zur Reinigung eines Fluids, insbesondere im Hochtemperaturbereich, eingesetzt wird. Das Verfahren welst folgende Arbeitsschritte auf: Einbringen der insbesondere keramischen Hohlfasern (15) in ein Gehäuse (14), Verschließen des Gehäuses (14) mit mindestens einer Kappe (13), Montieren des Gehäuses (14) auf einer Vorrichtung zur Herstellung des Hohlfasermembranmoduls (100), Rotieren des montierten Gehäuses (14) mit der Vorrichtung, Einbringen einer Verödungsmasse (17) in das Gehäuse (14), wobei die Verödungsmasse (17) die Enden der Hohlfasern (15) verschließt, Einbringen einer Vergußmasse (20) in das Gehäuse (14), Einbringen einer Dichtungsmasse (22) in das Gehäuse (14), wobei die eingebrachten Massen (20) und (22) hochtemperaturbeständig sind, Entfernen der Kappe (13) von dem Gehäuse, Entfernen der Verödungsmasse (17), wodurch die Hohlfasern (15) in ihren Endbereichen wieder offen sind, und Verbinden von Anschlussplatten (113) mit dem Gehäuse (14), wobei an die Anschlussplatten Gewindebuchsen oder Muffen angeschlossen werden können, welche Ein- bzw. Auslässe für das zu reinigende Fluid bilden.

Die EP 0 355 325 A1 beschreibt eine Dichtung, die einen Ring (17) aus einem elastischen Material umfasst, die vorgesehen ist, um zwischen zwei parallele, vorzugsweise ebene Dichtflächen (13,16) gepresst zu werden. Diese Dichtung soll vorzugsweise ein Teil einer Filtrations- und/oder Diffusionsvorrichtung sein, die ein Bündel (1) von Hohlfasern umfasst, die in Längsrichtung in einem Gehäuse (2) angeordnet sind, wobei die Faserenden in zwei Stirnwände (3) eingebettet sind, und wobei ein Dichtring (17) zwischen der Außenseite (13) einer oder beider Stirnwände (3) und einem Deckel (14) mit einem Einlass und/oder einem Auslaß (15) für eine Flüssigkeit angeordnet ist, die durch die Hohlfasern des Bündels fließen soll. Die Vorrichtung soll vorzugsweise für die Dialyse, Hämofiltration oder Hämodiafiltration verwendet werden.

Die US 2003/0029785 beschreibt ein Filter, das Membranen aus Hohlfasern (21) umfasst, in dem die Hohlfasern (21) als ein Bündel (19) in einem röhrenförmigen Gehäuse (3) angeordnet sind. Das Gehäuse (3) umfasst eine Endkappe (5) an jedem seiner Enden, wobei das Hohlfaserbündel (19) zwischen den Enden des Gehäuses (3) angeordnet ist. Die Enden des Hohlfaserbündels (19) umfassen jeweils einen Stützring (40), der dasselbe umgibt, und sie sind innerhalb des Stützrings (40) vergossen. Der Stützring (40) umfasst axial vorstehende Haken (42) und ist verschiebbar in dem Gehäuse (3) befestigt, um insbesondere axiale Kontraktionen des Hohlfaserbündels (19), die während der Hitzesterilisation auftreten, zu kompensieren.

Die US 5 411 662 A beschreibt eine Hohlfasermembran-Fluidtrennanordnung mit einem eingebauten Spülsteuerventil oder einem Reinigungsfluid-Rückflußsystem, in der mehrere Dichtelemente zum Abdichten der Kopfplatte vorgesehen sind. Diese Anordnung eignet sich unter anderem zum Abtrennen von Wasserdampf aus einem Gasstrom.

Es stellt sich daher die Aufgabe, ein Verfahren zur Verfügung zu stellen, mit denen undichte und damit schlecht oder fehlfunktionierende Membranmodule der in Rede stehenden Art in einfacher Weise erneut abgedichtet werden können.

Gemäß einem ersten Aspekt liefert die vorliegende Erfindung ein Verfahren gemäß Anspruch 1.

Für die Reparatur fehlerhafte Abdichtungen durch radial sich erstreckende Risse in der Kopfplatte eines derartigen Membranmoduls, bieten sich verschiedene Verfahren an. Insbesondere ist daran gedacht, dass eine zusätzliche Dichtung zwischen einer ein Rohrbündel haltenden Kopfplatte und einem die Kopfplatte haltenden Montagering zur Abdichtung von radialen Rissen eingebracht wird. Eine solche zusätzliche Dichtung zu einem ansonsten üblichen O-Ring zwischen dem Montagering und der Kopfplatte, axial sich erstreckend, wird nach Art eines Dichtringes, bevorzugt in Form eines Dichtungsbandes beispielsweise gesondert ausgebildet und optional zusätzlich durch eine in einen Spalt zwischen Kopfplatte und Montagering verpresste Dichtmasse. Ausgeführt als gesondert ausgebildetes, axial sich erstreckendes Dichtungsband wird dieses den (defekten) O-Ring ersetzen und darüber hinaus radiale Risse, axial vor dem O-Ring liegend, in der Kopfplatte sicher verschließen. Sind Rissbildungen axial über den O-Ring hinaus festgestellt oder ist der O-Ring völlig unbrauchbar, bspw. gerissen oder deformiert, kann eine unter Druck eingebrachte Dichtungsmasse axial über den O-Ring hinweg einen radialen Spalt zwischen dem Montagering und der Kopfplatte sowie die Ringnut für den O-Ring selbst ausfüllen und gegebenenfalls die Kopfplatte über ihre gesamte axiale Erstreckung abdichten.

In konstruktiver Ausgestaltung bei der Verwendung eines gesondert ausgebildeten Dichtrings ist weiter ein solcher aus einem Teflon vorgesehen, der einen T-förmigen Querschnitt aufweist, wobei ein Schenkel des Dichtrings zwischen Kopfplatte und dem Montagering eingebracht wird und die beiden anderen Schenkel von einem Hilfsring axial gegen eine Oberseite einer Kopfplatte und radial gegen die Innenseite des Montagerings verspannt werden.

Neben einer Abdichtung radialer Risse und/oder Brüche, axial vor einem O-Ring zwischen Kopfplatte und Montagering, können damit auch die eingangs erläuterten, halbmondartig sich außenrandseitig und axial erstreckenden Risse der Kopfplatte abgedichtet werden.

Darüber hinaus wird durch diese Maßnahmen eine Fehlfunktion des O-Rings zwischen der Kopfplatte und der Montagering behoben, ohne diesen zwangsläufig austauschen zu müssen.

Bei der Nutzung eines solchen im Querschnitt T-förmigen Dichtrings aus beispielsweise PTFE wird dieser vorzugsweise verpresst, so dass sein Material in der Kopfplatte aufgetretene Risse, Löcher oder dergleichen auch weitestgehend ausfüllt Hierzu kann vorgesehen sein, dass der Hilfsring axial gegen die Kopfplatte verspannt ist, bspw. durch die Kraft einer Feder gegen eine die Kopfplatte überdeckende Kappe. Alternativ oder zusätzlich kann durch die Geometrie des Hilfsrings bspw. aufgrund der Verwendung eines gewellten Metallrings eine Federkraft, sowohl radial als auch axial, hervorgerufen werden. Wird der Spalt zwischen der Kopfplatte und der Innenseite des Montagerings mit einer Dichtmasse verpresst, so werden als Dichtmaterial dauerelastische Silikone bevorzugt, die eine hohe Temperaturbeständigkeit aufweisen und lösungsmittelfrei sind.

Um die mechanische und chemische Widerstandsfähigkeit solcher Dichtmassen zu erhöhen, kann ferner vorgesehen sein, dass der Dichtmasse ein Quarzsand zugesetzt wird, dessen Körnung naturgemäß der Rissgröße anzupassen ist.

Die Verfahren nach der Erfindung werden anhand der Zeichnung näher erläutert, in der lediglich schematisch Ausführungsbeispiele dargestellt sind. In der Zeichnung zeigt:
Fig. 1: einen teilweisen und vereinfachten Schnitt durch ein erstes Membranmodul, der Erläuterung des erfindungsgemäßen Verfahrens dienend, und
Fig. 2: einen weiteren Schnitt, der Erläuterung eines optionalen Verfahrensschrittes dienend.

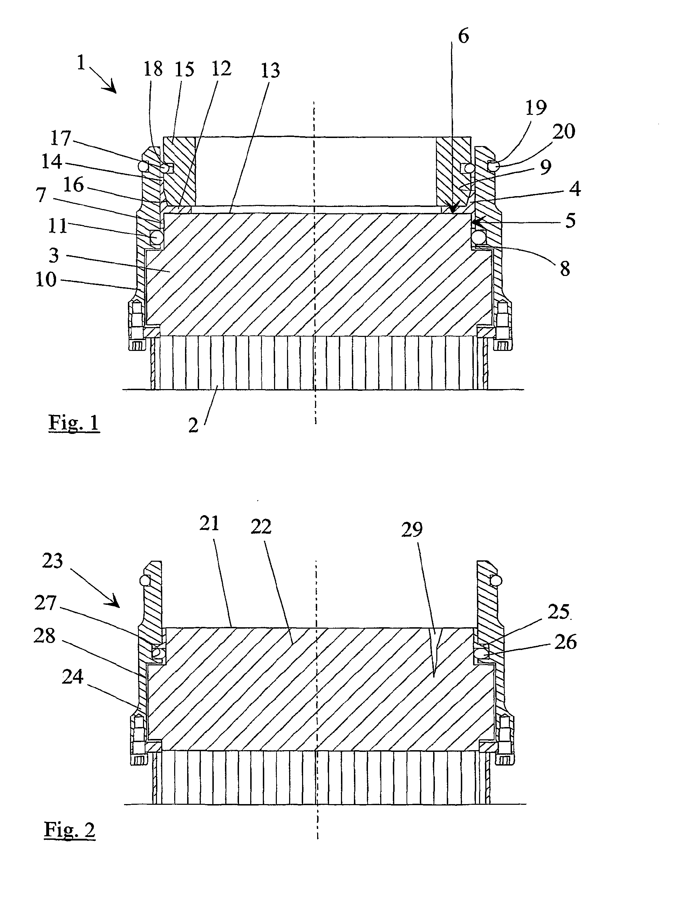

Für die Abdichtung eines Membranmoduls 1, in Fig. 2 vereinfacht in einem Schnitt dargestellt, mit einer ein Rohrbündel 2 oder Einzelrohre haltenden Kopfplatte 3, ist ein gesondert ausgebildeter, zusätzlicher Dichtring 4 vorgesehen, der sowohl Risse über den Umfang gemäß Pfeil 5 als auch außenliegende, axial sich erstreckende Risse gemäß Pfeil 6 abdichtet.

Der Dichtring 4 ist in einem Querschnitt im Wesentlichen von T-förmiger Gestalt. Ein Schenkel 7 des dreischenkligen Dichtrings 4 erstreckt sich axial bandartig und radial zwischen der Außenseite 8 der Kopfplatte 3 und einer Innenseite 9 eines die Kopfplatte 3 haltenden Montagerings 10. Dieser sich axial bandartig erstreckende Schenkel 7 des Dichtrings 4 kann damit sowohl radiale Risse und/oder Brüche gem. Pfeil 5 der Kopfpiätte 3 abdichten als auch die Funktion des üblicherweise verwendeten Dichtrings 11 übernehmen, wenn dessen Funktion bspw. nicht gewährleistet ist.

Ein weiterer Schenkel 12 des Dichtrings 4 überdeckt eine Oberseite 13 der Kopfplatte 3 und damit auch dort entstandene, axial in die Tiefe der Kopfplatte 3 reichende Risse gem. Pfeil 6.

Der dritte Schenkel 14 des Dichtrings 4 liegt wie der Schenkel 7 an der Innenseite 9 des Montagerings 10 an und wird von einem Hilfsring 15 gegen die Innenseite 9 des Montagerings 10 verspannt. Bevorzugt wird der auf der Oberseite 13 aufliegende Schenkel 12 und der Schenkel 7 axial verpresst und füllen diese dann die angesprochenen axial sich erstreckenden Risse in der Oberseite 13 und auch radial sich erstreckende Risse über den Umfang aus, die axial vor dem Dichtring 11 liegen, in Fig. 2 oberhalb desselben. Zweckmäßigerweise ist vor diesem Hintergrund der Dichtring aus einem Teflon, einem PTFE.

Damit ein möglichst hoher axialer Anpressdruck des Dichtrings 4 durch den Hilfsring 15 aufgebaut wird, kann dieser axial gegen die Kopfplatte verspannt sein, bspw. durch eine Feder gegen eine die Kopfplatte überdeckende Kappe, in der Zeichnung nicht dargestellt. Zusätzlich zu dem voranstehend erläuterten Verfahren kann vorgesehen werden, Risse, Ausbrüche oder dergleichen mit einer Dichtmasse zu verfüllen, insbesondere einer Dichtmasse auf Silikonbasis, die dauerelastisch ist, eine hohe Temperaturbeständigkeit aufweist und lösungsmittelfrei ist. Eine solche Dichtmasse kann ein Silikonkautschuk oder dergleichen sein, dem vorzugsweise noch Quarzsand geeigneter Körnung zugegeben ist. Werden auf diese Weise bspw. Risse in der Oberseite 21 einer Kopfplatte 22 eines Membranmoduls 23 mit einer eingebrachten Dichtungsmasse 29 repariert, in Fig. 2 nicht maßstabsgerecht, kann es für eine neue Abdichtung des Membranmoduls 23 ausreichend sein, einen Ringspalt 28 zwischen der Kopfplatte 22 und dem Montagering 24 ebenfalls mit einer Dichtmasse 25 zu verpressen, gegebenenfalls auch axial über einen beschädigten Dichtring 26 hinweg. Risse über den Umfang der Kopfplatte 22 werden so sicher verschlossen und die Fehlfunktion des Dichtrings 26 aufgehoben.

Von Vorteil ist bei den erläuterten Verfahren, dass diese, je nach aufgetretenem Schaden, jeweils für sich oder in geeigneter Kombination Anwendung finden können.

## Patentansprüche

1. Verfahren für die Abdichtung eines Membranmoduls, **dadurch gekennzeichnet, dass** ein Dichtring (4, 25) mit ersten, zweiten und dritten Schenkein (7, 12, 14) zwischen einer ein Rohrbündel (2) haltenden Kopfplatte (3) und einem die Kopfplatte (3) haltenden Montagering (10) eingebracht wird, wobei der erste Schenkel (7) radial zwischen der Kopfplatte (3) und dem Montagering (10) eingebracht wird, der zweite Schenkel (12) axial gegen eine Oberseite (13) der Kopfplatte (3) eingebracht wird und der dritte Schenkel (14) radial gegen eine Innenseite (9) des Montagerings (10) eingebracht wird.

2. Verfahren nach Anspruch 1, **dadurch gekennzeichnet, dass** die zweiten und dritten Schenkel von einem Hilfsring (15) axial gegen die Oberseite (13) der Kopfplatte (3) und radial gegen die Innenseite (9) des Montagerings (10) verspannt werden.

3. Verfahren nach Anspruch 1, **dadurch gekennzeichnet, dass** der Dichtring (4) einen T-förmigen Querschnitt aufweist.

4. Verfahren nach Anspruch 2, **dadurch gekennzeichnet, dass** der Hilfsring axial gegen die Kopfplatte verspannt ist.

5. Verfahren nach Anspruch 4, **dadurch gekennzeichnet, dass** der Hilfsring durch die Kraft einer Feder gegen eine die Kopfplatte überdeckende Kappe verspannt ist.

6. Verfahren nach einem oder mehreren der Ansprüche 2 bis 5, **dadurch gekennzeichnet, dass** der Hilfsring durch seine Geometrie eine Federkraft aufweist.

7. Verfahren nach Anspruch 1, **dadurch gekennzeichnet, dass** als zusätzliche Dichtung eine Dichtmasse (25) vorgesehen ist.

8. Verfahren nach Anspruch 1 für die Abdichtung eines Membranmoduls, **dadurch gekennzeichnet, dass** axial sich erstreckende Risse in einer Kopfplatte (3) mit einer Dichtmasse (29) verschlossen werden.

9. Verfahren nach Anspruch 8, **dadurch gekennzeichnet, dass** der Dichtmasse ein Quarzsand zugesetzt ist.

## Claims

1. Method for sealing a membrane module, **characterised in that** a sealing ring (4, 25) having first, second and third legs (7, 12, 14) is inserted between a head plate (3) holding a tube bundle (2) and a mounting ring (10) holding the head plate (3), the first leg (7) being inserted radially between the head plate (3) and the mounting ring (10), the second leg (12) being inserted axially against an upper side (13) of the head plate (3), and the third leg (14) being inserted radially against an inner side (9) of the mounting ring (10).

2. Method according to claim 1, **characterised in that** the second and third legs are braced axially against the upper side (13) of the head plate (3) and radially against the inner side (9) of the mounting ring (10) by an auxiliary ring (15).

3. Method according to claim 1, **characterised in that** the sealing ring (4) has a T-shaped cross section.

4. Method according to claim 2, **characterised in that** the auxiliary ring is braced axially against the head plate.

5. Method according to claim 4, **characterised in that** the auxiliary ring is braced against a cap overlapping the head plate by the force of a spring.

6. Method according to one or more of claims 2 to 5, **characterised in that** the auxiliary ring has a spring force due to its geometry.

7. Method according to claim 1, **characterised in that** a sealing mass (25) is provided as an additional seal.

8. Method according to claim 1 for sealing a membrane module, **characterised in that** axially extending cracks in a head plate (3) are closed by a sealing mass (29).

9. Method according to according to claim 8, **characterised in that** a quartz sand is added to the sealing mass.

## Revendications

1. Procédé pour l'étanchéification d'un module à membrane, **caractérisé en ce qu'**une bague d'étanchéité (4, 25) avec une première, une deuxième et une troisième branches (7, 12, 14) est mise en place entre une plaque de tête (3) maintenant un faisceau de tubes (2) et une bague de montage (10) maintenant la plaque de tête (3), la première branche (7) étant mise en place radialement entre la plaque de tête (3) et la bague de montage (10), la deuxième branche (12) étant mise en place axialement contre une face supérieure (13) de la plaque de tête (3) et la troisième branche (14) étant mise en place radialement contre une face intérieure (9) de la bague de montage (10).

2. Procédé selon la revendication 1, **caractérisé en ce que** la deuxième et la troisième branches sont serrées par une bague auxiliaire (15) axialement contre la face supérieure (13) de la plaque de tête (3) et radialement contre la face intérieure (9) de la bague de montage (10).

3. Procédé selon la revendication 1, **caractérisé en ce que** la bague d'étanchéité (4) a une section transversale en forme de T.

4. Procédé selon la revendication 2, **caractérisé en ce que** la bague auxiliaire est serrée axialement contre la plaque de tête.

5. Procédé selon la revendication 4, **caractérisé en ce que** la bague auxiliaire est serrée par la force d'un ressort contre un capuchon recouvrant la plaque de tête.

6. Procédé selon l'une ou plusieurs des revendications 2 à 5, **caractérisé en ce que** la bague auxiliaire est pourvue d'une force de ressort de par sa géométrie.

7. Procédé selon la revendication 1, **caractérisé en ce qu'**une masse d'étanchéité (25) est prévue comme joint complémentaire.

8. Procédé selon la revendication 1 pour l'étanchéification d'un module à membrane, **caractérisé en ce que** des fissures à extension axiale dans une plaque de tête (3) sont comblées par une masse d'étanchéité (29).

9. Procédé selon la revendication 8, **caractérisé en ce qu'**un sable de quartz est ajouté à la masse d'étanchéité.
